# EUROPEAN PATENT APPLICATION

(11) **EP 3 240 352 A1**
(43) Date of publication of application: **01.11.2017**
(21) Application number: 15871843.7
(22) Date of filing: 01.12.2015
(51) Int. Cl.: H04W 76/02

(54) **WIRELESS COMMUNICATION METHOD AND APPARATUS AND APPLICATION SYSTEM AND DEVICE THEREOF**

(30) Priority: 26.12.2014 CN 201410830032; 21.05.2015 CN 201510260519; 06.09.2015 CN 201510557321
(71) Applicant: Nationz Technologies Inc., Shenzhen, Guangdong 518057 (CN)
(72) Inventor: YANG, Xianwei, Shenzhen Guangdong 518057 (CN); ZOU, Hao, Shenzhen Guangdong 518057 (CN); DENG, Yuping, Shenzhen Guangdong 518057 (CN); LI, Meixiang, Shenzhen Guangdong 518057 (CN); LIU, Ding, Shenzhen Guangdong 518057 (CN); WANG, Guotai, Shenzhen Guangdong 518057 (CN); ZHAI, Yuehui, Shenzhen Guangdong 518057 (CN)
(74) Representative: ZHAOffice SPRL
(86) International application number: PCT/CN2015/096146
(87) International publication number: WO 2016/101774

(57) **Abstract**

Methods and apparatuses for wireless communication, and associated application systems and devices are disclosed. The method includes: negotiating, with an opposite terminal through a first communication mode, a communication parameter required by a second communication mode; establishing a connection in the second communication mode with the opposite terminal using the communication parameter; wherein the second communication mode is a wireless communication mode which requires the communication parameter to establish a connection, while the first communication mode is one different from the second communication mode.

## Description

### FIELD OF THE DISCLOSURE

The present disclosure relates to wireless communications, and more particularly, to wireless communication methods, apparatuses, and associated application systems and devices.

### BACKGROUND OF THE DISCLOURE

Typically the user may need to manually input communication parameters, such as a password, before establishing a wireless communication between devices of interest. For example, if a Bluetooth device wants to initiate paging in a master mode, pairing parameters of the other side are needed to be firstly known, such as Bluetooth address, pairing password, and so on. Only after two Bluetooth devices have been paired can their physical layers been connected for subsequent authentication and connection at higher layers. Typically, the Bluetooth pairing parameters can either be created by the user and then inputted into the master device and the slave device, or be automatically generated and outputted (e.g., displayed) by the master device and further inputted into the slave device by the user manually. Ways to generate the pairing password by the master device can be classed into three categories. First, a fixed PIN code (e.g., 0000 or 1234) can be taken as the pairing password. Second, the pairing password can be generated by performing a specific algorithm based on information including the current Bluetooth clock, address code, random numbers, etc. Third, an algorithmic key can be applied as the pairing password. Whatever way chosen, the user will need to bear the communication parameters in mind and input them into the corresponding device manually; in addition, the communication parameters, whether created by the user or generated by the master device, have insufficient security.

### SUMMARY OF THE DISCLOSURE

Wireless communication methods, apparatuses, and associated application systems and devices are disclosed, to address the inconvenience and insecurity issues in the establishing of a wireless communication connection between typical devices.

A technical solution adopted by the disclosure is as follows.

A wireless communication method may comprise:

negotiating with an opposite terminal, through a first communication mode, a communication parameter required by a second communication mode; establishing a connection in the second communication mode with the opposite terminal using the communication parameter; wherein, the second communication mode may be a wireless communication mode which requires the communication parameter to establish the connection; while the first communication mode may be one different from the second communication mode.

The communication parameter may be generated based on a master device's or a slave device's own information, including information stored on or generated by the devices.

The block of establishing a connection in the second communication mode with the opposite terminal using the communication parameter may comprise:

broadcasting, by the master device, a preset part of the communication parameter through broadcast information of the second communication mode, and sending, by a slave device, a page response after identifying a whole communication parameter according to the received partial communication parameter; and receiving, by the master device, the page response, and establishing a connection with the slave device under the second communication mode.

The block of the slave device identifying the whole communication parameter according to the received partial communication parameter may comprise:

comparing, by the slave device, the partial communication parameter received through the broadcast in the second communication mode against the corresponding part of the communication parameter of the second communication mode negotiated through the first communication mode; if they are the same, identifying, by the slave device, the communication parameter of the second communication mode negotiated through the first communication mode as the whole communication parameter.

The first communication mode may comprise peer-to-peer communication mode.

The peer-to-peer communication may comprise: wired or contacted communication; or wireless or contactless communication.

The second communication mode may comprise Bluetooth communication.

A wireless communication apparatus is further provided in the disclosure, it may comprise: a parameter-negotiating module configured to negotiate with an opposite terminal, through a first communication mode, a communication parameter required by a second communication mode; and a connection-establishment module configured to establish with the opposite terminal a connection in the second communication mode using the communication parameter;

The second communication mode may be a wireless communication mode which requires the communication parameter to build up a connection; while the first communication mode may be one different from the second communication mode.

The parameter-negotiating module may comprise:
a parameter-generation unit configured to generate the communication parameter based on the devices' own information, including the information stored on or generated by the devices; and a parameter-transmission unit configured to transmit the generated communication parameter to the opposite terminal through the first communication mode.

The connection-establishment module may comprise:
a parameter-broadcasting unit configured for a master device to broadcast a preset part of the communication parameter through broadcast information of the second communication mode; and a response-receiving unit configured for the master device to receive a page response, and to establish a connection in the second communication mode with a slave device.

The connection-establishment module may comprise:
a parameter-identification unit configured for the slave device to compare the partial communication parameter received through the broadcast in the second communication mode against the corresponding part of the communication parameter of the second communication mode that is negotiated through the first communication mode; and a page-response unit configured for the slave device to, if comparison result suggests they are the same, identify the communication parameter of the second communication mode that is negotiated through the first communication as the complete communication parameter, and to send a page response using the complete communication parameter.

A smart card is further provided by the disclosure, it may comprise: any one of the aforementioned wireless communication apparatuses.

A terminal is further provided by the disclosure, it may comprise: any one of the aforementioned wireless communication apparatuses.

A communication system is also provided in the disclosure, it may comprise: any one of the aforementioned wireless communication apparatuses.

Beneficial effects of the disclosure may be as follows: since one of two communication parties generates a communication parameter required by a second communication mode, and the communication parameter or the information based on which the communication parameter is generated can be transmitted to a wireless communication apparatus through another communication mode, i.e., the a first communication mode, the user needs not to manually input the communication parameter required by the second communication mode. Besides, the information based on which the communication parameter is generated can be the devices' own information. As compared with other information, the devices' own information usually has a low repetition probability, so the communication parameter generated based on this kind of information is not easily repeated. Therefore, it can ensure the uniqueness of the established connection and thus can improve the security of the wireless communication connection.

Further, the first communication mode can be peer-to-peer communication, such as contacted communication, or low-frequency magnetic induction communication, thus the transmitted communication parameter or information based on which the communication parameter is generated cannot be easily obtained by other devices, so the security of the wireless communication connection can be further improved.

### BRIEF DESCRIPTION OF THE DRAWINGS

FIG. 1 is a flowchart illustrating a wireless communication method according to an embodiment of the disclosure.
FIG. 2 is a block diagram illustrating a wireless communication apparatus according to an embodiment of the disclosure.
FIG. 3 is a block diagram illustrating a smart card according to an embodiment of the disclosure.
FIG. 4 a block diagram illustrating another wireless communication apparatus according to an embodiment of the disclosure.
FIG. 5 is a block diagram illustrating a wireless communication apparatus in a terminal according to an embodiment of the disclosure.

### DETAILED DESCRIPTION OF THE DISCLOSURE

In order to better illustrate embodiments and technical implementations of the disclosure, hereinafter technical implementations of the disclosure will be described in definite and comprehensive details with reference to the accompanying drawings. Obviously, the embodiments as described are only some but not all the embodiments of the disclosure. All other embodiments obtained by those of skill in the art based on the embodiments of the disclosure without making inventive efforts shall all fall in the protection of the disclosure.

In embodiments of the disclosure, Bluetooth devices may be communication devices supporting the Bluetooth communication protocol. In some application scenarios, besides the Bluetooth communication protocol, the Bluetooth devices can also support other communication protocols. For example, the Bluetooth devices can include mobile phones supporting the Bluetooth communication protocol, or smart cards embedded with a Bluetooth communication module and a contacted communication module. These Bluetooth devices can establish not only a Bluetooth connection between each other but also other communication connections.

In embodiments of the disclosure, smart cards may be SIM (Subscriber Identity Module) cards, SD (Secure Digital Memory Card) cards, etc. Portable devices may be smart bracelets, smart watches, etc. SIM cards may be standard SIM cards, USIM (Universal Subscriber Identity Module) cards, UIM (User Identify Module) cards, MicroSIM cards, NanoSIM cards, or other communication cards of various types and sizes. SD cards may be standard SIM cards, miniSDs, or other secure data cards with various types and sizes.

In embodiments of the disclosure, terminals may comprise mobile phones, tablet computers, laptop or desktop computers.

In embodiments of the disclosure, the "master device" may refer to the device which initiates a communication connection, while the "slave device" may refer to the device which responds to the communication connection. For example, in Bluetooth communication, the Bluetooth device initiating paging in the master mode might be the master device, while the Bluetooth device responding to the paging can be the slave device.

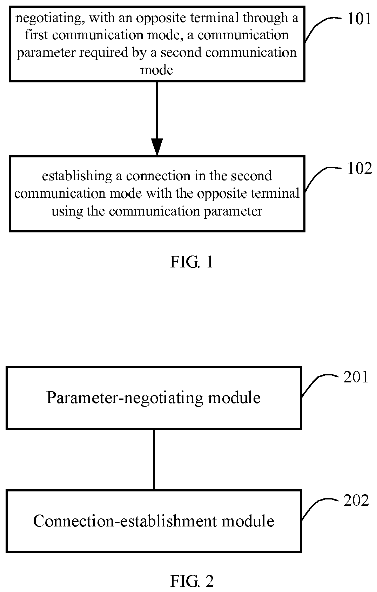

FIG. 1 is a flowchart illustrating a wireless communication method according to an embodiment of the disclosure. As shown in FIG. 1, the method may comprise the following steps.

In a first step 101, a communication parameter of a second communication mode can be negotiated with an opposite terminal through a first communication mode.

Herein, the second communication mode may be a wireless communication mode which requires a communication parameter for establishing a connection, and may include but not limited to: Bluetooth communication, WIFI communication, or any other ratio frequency communication. If the second communication mode is the Bluetooth communication, then the communication parameter can be a Bluetooth pairing password which is required to establish the Bluetooth communication; if the second communication mode is the WIFI communication, the communication parameter can be a WIFI password required to establish the WIFI communication; and if the second communication mode is other radio-frequency communication, the communication parameter can be the ratio-frequency parameters (including but not limit to password) required for establishing the other ratio frequency communication.

The first communication mode may be different from the second communication mode. Typically, the first communication mode may include a peer-to-peer communication mode. The peer-to-peer communication mode used to negotiate and transmit the communication parameter of the second communication mode can avoid the information transmitted from being not obtained by other devices, and can further ensure a secure connection in the second communication mode in the step 102.

Further, the peer-to-peer communication mode may include wired or contacted communication, or a wireless or contactless communication.

The wired or contacted communication mode may include, but is not limited to, ISO7816, SPI, UART, USB, or other wired interfaces. The wireless or contactless communication mode may include, but is not limited to, NFC (Near Field Communication), RCC (Range Controlled Communication), or low-frequency magnetic induction communication, or other close-range communications. However, when the second communication mode is the Bluetooth communication, the first communication mode would not be the Bluetooth communication.

To avoid manually inputting communication parameter each time when establishing a communication connection, the communication parameter of the second communication mode can be generated based on the master or slave device's own information. The master device may be the one which initiates the paging, whilst the slave device may be the one which responds to the paging. For example, in the process of a Bluetooth mobile phone initiating paging to a Bluetooth smart card and then establishing a Bluetooth connection, the Bluetooth mobile phone would be the master device while the Bluetooth smart card would be the slave device.

The devices' own information may include information stored on or generated by the devices.

The device stored information may be the device's identification information, such as an SIM card's IMSI (International Mobile Subscriber Identity), a mobile device's IMEI (International Mobile Equipment Identity), etc. The device stored information may also be information externally inputted and stored on the device, such as a password set by users in advance.

The device generated information may be the whole or part of random numbers generated by the device, which may include true random numbers generated by hardware and/or pseudo-random numbers generated by software. The true random numbers generated by hardware may include, but is not limited to, true random numbers generated by a security chip of the device.

To generate the communication parameter, the device information can be that of one of those two, or a combination of the two. The communication parameter generated finally may be the device' own information, or can be derived by a conversion of the device' own information, that is, the communication parameter can be generated using a preset algorithm. For example, a SIM card's IMSI information, having been encrypted using a preset encryption algorithm, can be taken as the communication parameter for the second communication mode. Accordingly, two communication parties may transmit the communication parameter directly through the first communication mode, or may just transmit the basis for the generation of the communication parameter (i.e., the device' own information). The two communication parties can negotiate to use a same algorithm to generate the same communication parameter. Meanwhile, they can store the communication parameter and a correspondence between the communication parameter and the basis for the generation of the communication parameter.

Regardless that the communication parameter is generated based on whichever device's information, so long as at least the basis for the generation of the communication parameter (the device information) is transmitted through the first communication mode from one party to the other, a foundation can be achieved to establish a connection between the two sides under the second communication mode.

### Example 1

Before building up a Bluetooth connection between a Bluetooth mobile phone and a Bluetooth SIM card, the Bluetooth SIM card can choose its IMSI as a Bluetooth pairing password, and can send it to the Bluetooth mobile phone through an ISO7816 interface, while the Bluetooth mobile phone can receive the IMSI through its ISO7816 interface, and may store it as a pairing password for Bluetooth connection. Due to the uniqueness of the SIM card's IMSI, the Bluetooth pairing password generated according to the SIM card's IMSI would also be unique, thus having higher security. Therefore it is an ideal scheme to generate the Bluetooth pairing parameter.

### Example 2

Some Bluetooth mobile phones, however, don't support the "read IMSI" command. In other words, if a Bluetooth pairing password is generated according to a smart card's own information, the Bluetooth mobile phone will not be able to acquire the Bluetooth pairing password through the ISO7816 interface, which is just the case in this example. Therefore in this example, the Bluetooth mobile phone would generate the Bluetooth pairing parameter according to its own IMEI and then send a preset command to inform the Bluetooth SIM card of the Bluetooth pairing parameter through the ISO7816 interface.

Specifically, the Bluetooth mobile phone can encode the communication parameter into a call number according to a preset format, and call a dialing command to transmit the call number to the Bluetooth SIM card. Herein, the preset encoded format shall be different from the character string format in other #*•••••# commands supported by a mobile terminal, and can't contain symbols "*", "#", etc. In one embodiment, the preset call number can have eighteen bits, in which the character "0" is a separator. The specific encoding format is shown in chart 1 as follows.

**Chart 1**

| Sequence (bits) | Field name | Description |
|---|---|---|
| 1-1 | Start character | 1 digit, with a fixed value 0 |
| 2-3 | Operation code | 2 digits, 11: for setting a communication parameter |
| 4-4 | Separator | 1 digit, with a fixed value 0 |
| 5-10 | Parameter 1 | 6 digits, a communication parameter generated by a mobile terminal |
| 11-11 | Separator | 1 digit, with a fixed value 0 |
| 12-17 | Parameter 2 | 6 digits, a communication parameter generated by a mobile terminal |
| 18-18 | Terminator | 1 digit, with a fixed value 0 |

After having encoded the communication parameter into the call number, the Bluetooth mobile phone can call a dialing command to dial the call number of the specific format. In practical application, a dialing function module built in the Bluetooth mobile phone can be called, and the call number can be transmitted to the dialing function module.

Accordingly, the Bluetooth SIM card can intercept the dialing command through 7816 channel to acquire the call number. Next, the Bluetooth SIM card can determine whether the call number satisfies the preset encoding format, such as the format in chart 1. If the call number as acquired meets the requirements, the Bluetooth SIM card can resolve from the call number a Bluetooth pairing password to establish the Bluetooth connection. And the Bluetooth SIM card will not actually call the call number.

Typically, in the present example the communication parameter will not be limited to be generated according to the master device's or the slave device's own information. It is actually determined according to the specific conditions of the devices applied in the present example, so long as that device information based on which the communication parameter for the second communication mode is generated, can be transmitted between both communication parties through a first communication mode different from the second communication mode.

Since the communication parameter for the second communication mode can be generated according to the device's own information, the user's manual input operation each time when establishing a second communication mode can be eliminated, which can thus improve the user experience. Furthermore, generating the communication parameter for the second communication mode according to the device's own information can taking better advantage of low repetition rate and high security of the device's identification information and thus can improve the security of the communication parameter, which can in turn improve the security of the connection in the second communication mode.

After having acquired the device information used to generate the communication parameter for the second communication mode, both communication parties can negotiate to take the device information directly as the communication parameter or to use a same algorithm to generate the same parameter based on the device information. The method can then proceed to step S102.

In step 102, the communication parameter can be taken to establish the connection with an opposite terminal in the second communication mode.

Specifically, after having negotiated with a slave device on the communication parameter required by second communication mode, a master device can use the communication parameter to establish the connection with the slave device in the second communication mode.

Having generated the communication parameter according to its own information, the slave device can transmit the communication parameter through the first communication mode. While the opposite terminal can receive through the first communication mode the communication parameter or the information of the slave device and so generate the communication parameter accordingly, the opposite terminal can then send a request to the slave device to establish a connection therebetween in the second communication mode. The request may carry the communication parameter received or generated by the opposite terminal. The slave device can compare it with the communication parameter generated by itself in the step 101. If they are consistent, a connection can be established therebetween; otherwise the request would be rejected.

If the master device were to generate the communication parameter according to its own information, then in the above step 101 after the master device has transmitted outwards its own information and/or the communication parameter through the first communication mode, the master device can initiate a request, which may carry the communication parameter generated in the step 101, to establish a connection in the second communication mode, regardless that the opposite terminal receives or not receives the master device information and/or the communication parameter. The opposite terminal can compare the communication parameter carried in the connection request against the communication parameter received through the first communication mode or generated according to the master device's own information received through the first communication mode. If they are consistent, a connection can be established; otherwise the connection request would be rejected.

Of course, the process of establishing a connection in the second communication mode shall not be limited to the two cases as described above.

Specifically, assume the second communication mode is the Bluetooth communication, when the master device broadcasts a pairing parameter on a page scan physical channel, then, a malicious third party, if exists, can scan the Bluetooth broadcast information of the master device and steal the pairing parameter, and then may pretend to be the slave device and attempt to establish a physical channel with the master device, leading to an insecure malicious Bluetooth connection. To solve this problem, the disclosure further provides an implementation as follows:

The master device can broadcast a preset part of the communication parameter through broadcast information pertaining to the second communication mode. The slave device can send a page response after identifying the whole communication parameter according to the partial communication parameter received.

The master device can receive the page response and establish a connection in the second communication mode with the slave device.

The slave device identifying the whole communication parameter according to the received partial communication parameter may include the following process.

The slave device can compare the partial communication parameter received through the broadcast in the second communication mode against the corresponding part of the communication parameter for the second communication mode negotiated through the first communication mode.

When they are the same, the communication parameter for the second communication mode that is negotiated through the first communication mode can be determined as the whole communication parameter.

Specifically, to prevent a malicious third party from taking advantage of the communication parameter contained in the broadcast information and thus establishing an illegal connection in the second communication mode, in the example 3 the master device can include only a specific part but not the whole of the communication parameter in the broadcast information pertaining to the second communication mode, after intercepting the broadcast information pertaining to the second communication mode. Therefore, even if the broadcast information pertaining to the second communication mode is intercepted, the malicious third party will still not be able to pretend as the slave device and so send a page response to the master device, because what is intercepted is merely a part of the communication parameter. On the other side, after having received the partial communication parameter in the broadcast information, the slave device can compare the communication parameter negotiated in the step 101 against the partial communication parameter. If they are the same, the slave device can send a page response to the master device based on the whole communication parameter negotiated in the step 101.

### Example 3

The master device is a smart card, while the slave device is a smart phone, and the second communication mode is Bluetooth communication. The Bluetooth pairing parameter negotiated in the step 101 is the identification information of the smart card itself, including its IMSI. That is, the IMSI of the smart card serves as the pairing parameter for the Bluetooth communication.

The IMSI typically consists of 15 digits of decimal numbers, including three parts: three digits of Mobile Country Codes (MCC), two digits of Mobile Network Codes (MNC), and ten digits of Mobile Subscriber Identification Numbers (MSIN). For smart cards in a same Public Land Mobile Network (PLMN), the MCCs and MNCs in the smart cards' IMSIs are the same, therefore, the MSIN can best identify a smart card.

When the smart card, as the master device, broadcasts the pairing parameter on the page scan physical channel for the Bluetooth communication, the smart card can broadcast only the information related to MSIN, which is a part of the pairing parameter for the Bluetooth communication.

Typically, the smart card can broadcast only the first six digits of MSIN on the page scan physical channel. Usually, the M0M1M2M3 in MSIN can have correspondence with the H0H1H2H3 in the Mobile Directory Number (MDN), while four digits ABCD can be freely assigned. Therefore, in practice, the first six digits of MSIN can be used to identify a smart card, while the last four digits can be used as an authentication code between the smart phone and the smart card.

After having received the partial communication parameter in the broadcast information, the slave device (smart phone) can compare the received partial communication parameter (such as the first six digits of MSIN) against the corresponding part of the pairing parameter (such as the 6^{th} to 11^{th} bits of IMSI) stored in itself. If the comparison result suggests they are the same, the slave device can determine that the pairing parameter stored is the whole pairing parameter of the calling party sending the broadcast information, and thus can send a page response to the master device based on the whole pairing parameter.

More specifically, the first communication mode is ISO7816 communication; the second communication mode is the Bluetooth communication; the master device is a SIM card; and the slave device is a mobile phone. Either the master device or the slave device comprises an ISO7816 interface and a Bluetooth communication module, and the IMSI of the SIM card is agreed to be the pairing parameter for the Bluetooth communication connection. The specific implementation process of the wireless communication method can follow:
Step 1. The mobile phone establishes a 7816 communication connection with the SIM card through their 7816 communication interfaces.
Step 2. The SIM card generates a pairing parameter required for the Bluetooth connection. The required pairing parameter may include random numbers and / or the IMSI identifier of the SIM card, or other necessary information.
Step 3. The mobile phone sends, when necessary, a specific 7816 command, and retrieves from the SIM card the pairing parameter required for the Bluetooth connection. Specially, the mobile phone can send a 7816 command to obtain the IMSI.
Step 4. The SIM card sends a part of the pairing parameter through the Bluetooth communication module. Specially, The SIM card can send the first six digits of MSIN of IMSI (EF+M0M1M2M3) through the Bluetooth communication module.
Step 5. The mobile phone receives the partial pairing parameter through the Bluetooth communication module, and then compares it against the corresponding part of the pairing parameter obtained in Step 3. If they are the same, the mobile phone can reply with a page response based on the whole pairing parameter. Specially, the mobile phone can compare the received first six digits of MSIN in the IMSI against the corresponding part of IMSI obtained through the 7816 command, if they are the same, a page response can be returned taking the whole IMSI as the pairing parameter.
Step 6. Both parties start the subsequent authentication and high-layer connection process.

According to the wireless communication method provided in above implementation, the communication parameter required for the second communication mode can be negotiated via the first communication mode. And the way including the partial communication parameter in the broadcast information of the second communication mode in the master device can prevent a malicious third party from grasping the correct communication parameter, and so can effectively avoid the establishment of a malicious connection. Specifically, as for Bluetooth communication connection, the master device can be allowed to broadcast only the partial pairing parameter while transmit the whole pairing parameter to the slave device through other communication connections, thus preventing the malicious third party from obtaining the whole pairing parameter by scanning the Bluetooth broadcast channel, eliminating the possibility of an insecure and malicious Bluetooth connection.

In the above example, the master device and the slave device as involved are selected as a Bluetooth SIM card and a Bluetooth mobile phone as an example, however, the disclosure shall not be limited to the above two devices, any two devices, so long as there exist two or more different communication modes therebetween, can be applied. Hence the master device and the slave device can be any smart cards or terminals.

Furthermore, in practical application, both communication parties can establish a connection in the second communication mode through the above process. After having established the connection, both communication parties can perform data transmission through the second communication mode.

In addition, in the process of both communication parties carrying out data transmission through the second communication mode, to further ensure the data transmission security, the data can be encrypted. Typically, the two communication parties can encrypt and decrypt data using symmetric keys. More specifically, both parties can generate a key according to the transmitted device information in step 101, or one party can transmit the key directly to the opposite party through the first communication mode after generating a key based on information itself, so that the opposite party can use the key directly after receiving the key.

FIG. 2 is a block diagram illustrating a wireless communication apparatus according to an embodiment of the disclosure. As shown in FIG. 2, the wireless communication apparatus comprises a parameter-negotiating module 201 and a connection-establishment module 202.

The parameter-negotiating module 201 is configured to negotiate with an opposite terminal through the first communication mode, a communication parameter required by the second communication mode.

The connection-establishment module 202 is configured to establish a connection in the second communication mode with the opposite terminal using the communication parameter.

Wherein, the second communication mode is a wireless communication mode which requires the communication parameter to establish a connection.

The first communication mode is one different from the second communication mode.

In the above wireless communication apparatus, the parameter-negotiating module 201 comprises:
a parameter-generation unit, configured to generate the communication parameter with devices' information, wherein the devices' information comprises information stored on and/or generated by the devices; and
a parameter-transmission unit, configured to transmit the generated communication parameter to the opposite terminal through the first communication mode.

Herein, the parameter-negotiating module 201may be provided in the master device, or in the slave device. No matter the parameter-negotiating module 201 is provided in the master device or in the slave device, the corresponding opposite terminal device must include a parameter-negotiating module for receiving and storing the communication parameter.

In the above wireless communication apparatus, the connection-establishment module 202 comprises:

a parameter-broadcasting unit, configured for the master device to broadcast a preset part of the communication parameter through broadcast information of the second communication mode; and
a response-receiving unit, configured for the master device to receive a page response, and to establish a connection with the slave device in the second communication mode.

Obviously, the connection-establishment module 202 is provided in the above wireless communication apparatus of the master device.

Apparently, when the above wireless communication apparatus is provided in the slave device, the connection-establishment module 202 comprises:

A parameter-identification unit, configured for the slave device to compare the partial communication parameter received through the broadcast of the second communication mode against a corresponding part of the communication parameter pertaining to the second communication mode that is negotiated through the first communication mode; and

A page-response unit, configured for the slave device to, when the comparison result indicates they are the same, identify the communication parameter pertaining to the second communication mode negotiated through the first communication mode as the whole communication parameter, and to send a page response using the whole communication parameter.

A smart card is further provided in the disclosure. The smart card comprises any above apparatus of wireless communication.

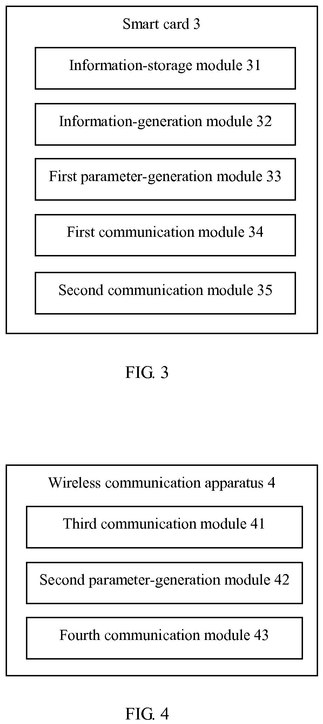

In one embodiment, as shown in FIG. 3, a smart card 3 comprises an information-storage module 31, an information-generation module 32, a first parameter-generation module 33, a first communication module 34 and a second communication module 35. The information-storage module 31 is configured to store the International Mobile Subscriber Identity which is served as the smart card stored information. The information-generation module 32 is configured to generate true random numbers and / or pseudo-random numbers which are served as the smart card generated information. The first parameter-generation module 33 is configured to generate a communication parameter according to its own information including the smart card stored information in the information-storage module 31 and / or the smart card generated information in the information-generation module 32. The first communication module 34 is configured to transmit the information and / or the communication parameter generated by the first parameter-generation module 33 through the first communication mode. The second communication module 35 is configured to establish a connection in the second communication mode with an opposite terminal receiving the information or the communication parameter transmitted by the first communication module 34, using the communication parameter generated by the first parameter generation module 33. The second communication module 35 is different from the first communication module 34.

Accordingly, as shown in FIG. 4, a wireless communication apparatus 4, with which the smart card 3 establishes a communication connection, comprises a third communication module 41, a second parameter-generation module 42 and a fourth communication module 43. Wherein, the third communication module 41 is configured to receive the smart card's own information sent by the smart card and / or the communication parameter generated by the smart card according to the smart card's own information through the first communication mode. The smart card's own information includes the smart card stored information and / or the smart card generated information. The second parameter-generation module 42 is configured to generate a communication parameter according to the smart card's own information received by the third communication module. The fourth communication 43 is configured to establish a connection in the second communication mode with the smart card using the communication parameter. The second communication mode is one different from the first communication mode.

In some embodiments, if information received by the third communication module 41 from the smart card contains the communication parameter, the second parameter-generation module 42 shall be omitted.

In some embodiments, the third communication module 41 comprises a peer-to-peer communication module. Typically, the third communication module 41 comprises a contacted communication module or one of low-frequency magnetic induction communication modules. The contacted communication module includes but is not limited to a 7816 interface.

In some embodiments, the fourth communication 43 includes a Bluetooth communication module, WIFI communication module or any of other ratio frequency communication modules.

In some embodiments, in the process of data transmission through the fourth communication 43 between the wireless communication apparatus 4 and the smart card, to further ensure data transmission security, the data shall be encrypted. Typically, the wireless communication apparatus 4 also includes a second encryption-and-decryption module. More specifically, the second encryption-and-decryption module can encrypt and decrypt data using symmetric keys. More specifically, the second encryption-and-decryption module can generate a key according to the above smart card's own information. In some embodiments, the third communication module 41 is further configured to obtain the key from the smart card directly. The wireless communication apparatus 4 can use the key directly after receiving the key, such that omitting the block to generate the key.

Particularly, the smart card can comprise an ISO7816 interface and a Bluetooth communication module, used to implement the wireless communication method provided in the disclosure.

A terminal is further provided in the disclosure, the terminal comprises any of wireless communication apparatuses aforementioned.

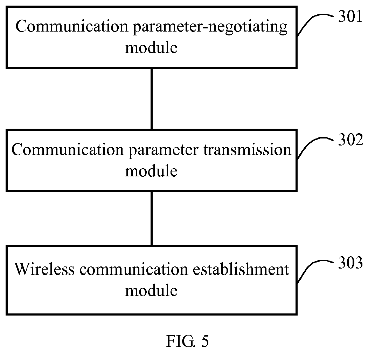

In an embodiment, as shown in FIG. 5, the wireless communication apparatus in the terminal comprises a communication parameter-negotiating module 301, a communication parameter transmission module 302 and a wireless communication establishment module 303.

The communication parameter-negotiating module 301 is configured to negotiate a communication parameter required by the second communication mode.

The communication parameter transmission module 302 is configured to send a preset command to transmit the communication parameter to a smart card through the first communication mode.

The wireless communication establishment module 303 is configured to establish a connection in the first communication mode with the smart card receiving the communication parameter using the communication parameter.

Wherein, the first communication mode is a wireless communication mode which requires the communication parameter for establishing a connection.

The second communication mode is a peer-to-peer communication different from the first communication mode.

Further, in above wireless communication apparatus, the communication parameter transmission module may include:

A encode unit, configured to encode the communication parameter into a call number according to a preset format; and

A dialing unit, configured to call a dialing command to transmit the call number to the smart card.

Particularly, the terminal may include an ISO7816 interface and a Bluetooth communication module, used to implement the wireless communication method provided in the disclosure.

The disclosure further provides a communication system, including any of smart cards and terminals aforementioned.

Particularly, the smart card and the terminal in the communication system both may comprise an ISO7816 interface and a Bluetooth communication module, negotiating a Bluetooth pairing parameter through ISO7816 communication, thus to establish a Bluetooth connection. Typically, the system generates the Bluetooth pairing parameter according to the smart card's or the terminal's own information. Further, the system generates the Bluetooth pairing parameter according to device identification information of the smart card or the terminal. Besides, when the system establishes the Bluetooth connection, the master device broadcasts only a preset part of the Bluetooth pairing parameter. The slave device identifies a whole Bluetooth pairing parameter negotiated through a ISO7816 interface according to the received partial Bluetooth pairing parameter and sends a page response based on the whole Bluetooth pairing parameter, thus establishing a more secure Bluetooth connection.

Each module of the communication system in the embodiment executes steps described in embodiments of communication method aforementioned, respectively. Therefore, they have the same beneficial effects. In addition, it should be understood that, embodiments of the communications system as described above are only schematic. The division of described modules is just in a logic function division, in the actual implementation, they can be also divided in other means. Besides, couplings or communication connections between modules is through some interfaces, and also is electrical or in other forms.

Each functional module above, as a part of the communication system, is a physical frame or not, provided in a place or distributed to a plurality of network elements, and realized with hardware and also software function frame. According to actual requirements, choose a part or all of modules to achieve the purpose of the disclosure.

One skill in the art should understand that what provided in the embodiment of the disclosure is a method, system, or products of computer program. Therefore, an embodiment of hardware, an embodiment of software or an embodiment of the combination of hardware and software is used in the disclosure. Meanwhile, the disclosure implements computer program products on one or a plurality of computer storage mediums (comprising but not limit to magnetic disk memory, optical memory, etc.) including computer program code.

The disclosure is described in accordance with flowcharts and / or block diagrams of a method, device (system) and computer program products. It should be understood that computer program commands is implemented by each flow and / or a block in flowcharts and / or schematic diagrams, and the combination of each flow and / or a block in flowcharts and / or schematic diagrams. A device is produced by providing those computer program commands to a processor of a common computer, a special computer or other embedded or other programming data processing devices, such that commands which a processor of a computer or other programming data processing devices executes produce an apparatus used to realize functions specified in one or a plurality of flows in the flowcharts and / or one or a plurality of blocks in the block diagrams.

Those computer program commands is also stored in a computer readable memory guiding computer or other programming data processing devices work in a certain way, such that commands stored in the computer readable memory produce a product including a command apparatus. The command apparatus realizes functions specified in one or a plurality of flows in the flowcharts and / or one or a plurality of blocks in the block diagrams.

Those computer program commands is also loaded in a computer or other programming data processing devices, such that a series of operation steps are executed in the computer or other programming data processing devices to produce processing realized by computers. Then, commands executed in the computer or other programming data processing devices is provided to used for realizing functions specified in one or a plurality of flows in the flowcharts and / or one or a plurality of blocks in the block diagrams.

Again, the above as mentioned is about merely some embodiments of the disclosure, and not restrictive to the scope of the disclosure hereafter. Any equivalent structure or flow transformations made to the disclosure with the specification and drawings of the disclosure, such as combination of technological characteristics of various embodiments, or any direct or indirect applications of the disclosure on other related fields, shall all be covered within the protection of the disclosure.

## Claims

1. A wireless communication method, comprising:
negotiating, with an opposite terminal through a first communication mode, a communication parameter required by a second communication mode;
establishing a connection in the second communication mode with the opposite terminal using the communication parameter;
wherein, the second communication mode is a wireless communication mode which requires the communication parameter to establish a connection; the first communication mode is one different from the second communication mode.

2. The wireless communication method according to claim 1, wherein the communication parameter is generated according to device information of a master device or a slave device, comprising information stored on and/or generated by the devices.

3. The wireless communication method according to claim 1, wherein the block of establishing the connection in the second communication mode with the opposite terminal using the communication parameter comprises:
broadcasting, by a master device, a preset part of the communication parameter through broadcast information of the second communication mode, and sending, by a slave device, a page response after identifying a whole communication parameter according to the received partial communication parameter; and
receiving, by the master device , the page response, and establishing a connection with the slave device in the second communication mode.

4. The wireless communication method according to claim 3, wherein the block of the slave device identifying the whole communication parameter according to the received partial communication parameter comprises:
comparing, by the slave device, the partial communication parameter received from the broadcast of the second communication mode against a corresponding part of the communication parameter for the second communication mode that is negotiated through the first communication mode;
when they are the same, identifying, by the slave device, the communication parameter for the second communication mode that is negotiated through the first communication mode as the whole communication parameter.

5. The wireless communication method according to claim 1, wherein the first communication mode comprises a peer-to-peer communication mode.

6. The wireless communication method according to claim 5, wherein the peer-to-peer communication mode comprises:
a wired or contacted communication mode; or
a wireless or contactless communication mode.

7. The wireless communication method according to claim 1, wherein the second communication mode comprises a Bluetooth communication mode.

8. A wireless communication apparatus, comprising: a parameter-negotiating module and a connection-establishment module, wherein the parameter-negotiating module is configured to negotiate, with an opposite terminal through a first communication mode, a communication parameter required by a second communication mode ; and
the connection-establishment module is configured to establish a connection in the second communication mode with the opposite terminal using the communication parameter;
wherein, the second communication mode is a wireless communication mode which requires the communication parameter to establish a connection, and the first communication mode is one different from the second communication mode.

9. The wireless communication apparatus according to claim 8, wherein the parameter-negotiating module comprises:
a parameter-generation unit configured to generate the communication parameter according to devices' information, wherein the devices' information comprises information stored on and/or generated by the devices; and
a parameter-transmission unit configured to transmit the generated communication parameter to the opposite terminal through the first communication mode.

10. The wireless communication apparatus according to claim 8 or 9, wherein the connection-establishment module comprises:
a parameter-broadcasting unit configured for a master device to broadcast a preset part of the communication parameter through broadcast information of the second communication mode; and
a response-receiving unit configured for the master device to receive a page response, and to establish a connection with a slave device in the second communication mode.

11. The wireless communication apparatus according to claim 8 or 9, wherein the connection-establishment module comprises:
a parameter-identification unit configured for the slave device to compare the partial communication parameter received through the broadcast of the second communication mode against a corresponding part of the communication parameter pertaining to the second communication mode that is negotiated through the first communication mode; and
a page-response unit configured for the slave device to, when the comparison result indicates they are the same, identify the communication parameter pertaining to the second communication mode negotiated through the first communication mode as the whole communication parameter, and to send a page response using the whole communication parameter.

12. A smart card, comprising: the wireless communication apparatus according to any one of claims 8 to 11.

13. A terminal, comprising: the wireless communication apparatus according to any one of claims 8 to 11.

14. A communication system, comprising: the smart card according to claim 12 and the terminal according to claim 13.
